# EUROPÄISCHE PATENTSCHRIFT

(11) **EP 2 145 541 B1**
(45) Veröffentlichungstag und Bekanntmachung des Hinweises auf die Patenterteilung: **20.03.2013**
(21) Anmeldenummer: 09008178.7
(22) Anmeldetag: 23.06.2009
(51) Int. Cl.: A22B 5/00, A22B 7/00

(54) **Vorrichtung zur Positionierung von Schlachttierkörperhälften für optische Aufnahmen in der Spaltebene**
Device for positioning halves of bodies of slaughtered animals for optical recording in the cleavage plane
Dispositif de positionnement de moitiés de corps d'animaux d'abattage pour des réceptions optiques dans la zone de séparation

(30) Priorität: 17.07.2008 DE 202008009594 U
(43) Veröffentlichungstag der Anmeldung: 20.01.2010
(73) Patentinhaber: CSB-System AG, 52511 Geilenkirchen (DE)
(72) Erfinder: Schimitzek, Peter, 52511 Geilenkirchen (DE)
(74) Vertreter: Weihrauch, Frank

(56) Entgegenhaltungen:
- EP-A1- 0 632 960
- EP-A2- 0 730 146
- WO-A1-2004/068950
- FR-A1- 2 545 010
- FR-A1- 2 694 479

## Beschreibung

Die Erfindung betrifft eine Positioniervorrichtung für an Haken hängenden Schlachttierkörperhälften, insbesondere Schweinehälften, zur optischen Aufnahme in der Spaltebene mit nachfolgender Bewertung und Klassifizierung.

Üblicherweise werden Schlachttierkörperhälften, wie Schweinehälften, an einem Einzelhaken, einem Eurohaken, hängend in Schlachthöfen und Fleischverarbeitungsbetrieben beispielsweise über Rohrbahnen transportiert, wobei die linke und die rechte Hälfte eines Schlachttiers an aufeinander folgenden Haken hängen.

Eine Bewertung und Klassifizierung von Schweinen erfolgt gemäß den dafür geltenden Vorschriften auf Basis der linken Hälfte, beispielsweise mittels optischer Bildverarbeitung, wozu eine optische Aufnahme in der Spaltebene, wie im Bereich der Schinken- und Lendenregion, mit Hilfe einer elektronischen Kamera vorgenommen wird.

Zur Vermeidung von Parallaxefehlern, die zu Messfehlern bei der rechnergestützten Auswertung der Aufnahmen sowie zu nicht korrekten Qualitätseinstufungen und Bewertungen führen würde, werden die Schlachttierkörperhälften in der Spaltebene bekanntermaßen von mindestens zwei vertikal übereinander, mit genügendem Abstand, außerhalb des interessierenden Aufnahmebereichs waagerecht fest angeordneten, Führungsrohren oder -elementen geführt.

Nach der Druckschrift EP 0 730 146 A2 wird eine derartige Vorrichtung mit einigen Stäben zur Ausrichtung der Karkasse zur Kameraebene benutzt.

Aus der Druckschrift DE 30 49 589 A1 ist Vorrichtung zum Klassifizieren von Fleisch mit einem Schild zum Ausrichten der Schlachttierhälften in der Messstation bekannt. Die Schlachttierhälften werden der Messstation mit Videokameras zum Abtasten der Schlachttierhälften entlang einer Transportbahn zugeführt.

An einer Stützkonsole ist ein Ausrichtschild angeordnet, das in Form einer Schaufel mit einer rechtwinkligen Anlagefläche ausgebildet ist. Das Ausrichtschild wird mittels eines Arbeitszylinders an die Transportbahn herangefahren. Die Schlachttierhälfte legt sich infolge des Eigengewichts an dem Schild an und es erfolgt die Videoaufnahme.

Das zur Positionierung benutzte Ausrichtschild ist konstruktiv und mechanisch aufwendig, wobei sich zudem nur geringe Durchlaufmengen von Schlachttierkörperhälften klassifizieren lassen.

Die Aufgabe der Erfindung besteht darin, eine Positioniervorrichtung für Schlachttierkörperhälften, insbesondere Schlachtschweinehälften, zur parallelen Ausrichtung der Spaltebene zur Aufnahmeebene einer Kamera zu entwickeln.

Die Aufgabe wird durch die im Patentanspruch 1 aufgeführten Merkmale gelöst. Bevorzugte Weiterbildungen ergeben sich aus den Unteransprüchen.

Eine Positioniervorrichtung für Schlachtschweinhälften zur optischen Aufnahme in der Spaltebene, insbesondere in der Schinken- und Lendenregion, besteht im Wesentlichen aus mindestens zwei vertikal übereinander, mit genügendem Abstand, außerhalb des interessierenden Aufnahmebereichs an vertikalen Ständern horizontal, parallel angeordneten, vorderen Führungsrohren oder -elementen und mindestens einem, bezüglich der Spaltseite vorzugsweise hinter dem oberen Führungsrohr beweglich angeordnetem Führungselement, das in der Aufnahmeposition der Schlachtschweinhälfte Rollen als Druckelemente aufweist.

Die Rollen im Aufnahmebereich stellen im Zusammenwirken mit den vorderen Führungsrohren oder -elementen die exakt parallele Ausrichtung der Spaltebene zur Aufnahmeebene der Kamera sicher.

Die Achsen der Rollen sind in der horizontalen Ebene im Aufnahmebereich so gegeneinander versetzt, dass diese über einen Bereich ihres Umfangs die Spaltebene über die Rückenkontur vollflächig gegen das vordere Führungsrohr oder - element drücken, so dass die Parallelität zur Aufnahmeebene der Kamera gewährleistet ist.

Alternativ können die Rollen im Rückenbereich der Schlachtschweinhälfte unterschiedliche Durchmesser aufweisen, um über die Kontur an mindestens drei Punkten Druck einbringen zu können.

Das Führungselement mit den Rollen ist von zwei abgewinkelten Hebeln mit jeweils einem Gewicht aufgenommen, wobei die Drehachse der Hebel vorzugsweise in Verlängerungen der senkrechten Halterungen des Führungselements an einem Fixpunkt angeordnet ist.

Optional weisen die Führungsrohre oder -elemente als auch das Führungselement am Einlauf jeweils mindestens eine Rolle auf, um das senkrechte Hängen der Schlachtschweinhälfte im Aufnahmebereich abzusichern.

Der vertikale Abstand der festen Führungsrohre oder - elemente ist einstellbar, um exakte Aufnahmen regional bedingter Größenunterschiede von Schlachtschweinen abzusichern.

Da die Bewertung der Schweine stets auf Basis der linken Hälfte erfolgt, ist es sinnvoll die rechte Hälfte mit dem Rücken zur Kamera an den Führungsrohren oder -elementen vorbeizuführen.

Im Bereich des Einlaufs zu den waagerechten Führungsrohren oder -elementen ist hierzu ein Anlaufelement angeordnet, an das das jeweilige Vorderbein der Schweinehälfte anläuft und für die linke Hälfte eine Drehung der Spaltebene in Richtung der Kameraposition und für die rechte Hälfte mit dem Rücken dazu bewirkt.

In einer Ausführungsvariante ist im Bereich des Einlaufs der Schlachtschweinhälften an den Führungsrohren oder - elementen ebenfalls jeweils mindestens eine Rolle angeordnet.

Im speziellen Fall der Zuführung der am Haken hängenden Hälften über eine geneigte Rohrbahn, sind die Achsen der Rollen entsprechend des Winkels der über dem Einlauf verlaufenden Rohrbahn geneigt, um die senkrechte Position der Hälfte im Aufnahmebereich der Kamera abzusichern.

Der besondere Vorteil der Positioniervorrichtung besteht in der sicheren Ausrichtung der Spaltebene der an einem Haken hängenden Schlachtschweinhälfte zur Aufnahmeebene, so dass keine Parallaxefehler bei der Aufnahme entstehen und eine exakte Bewertung und Klassifizierung gesichert ist.

Die Positioniervorrichtung ist kostengünstig herstellbar und funktionssicher ausgebildet.

Vorteilhaft ist eine modulare Bauweise der Positioniervorrichtung, so dass eine einfache und schnelle Anpassung an geforderte Durchsatzmengen und örtliche Verhältnisse im Schlachthof möglich ist.

Die Positioniervorrichtung ist durch eine vollflächige Ausbildung der Rollen sowie der Abdeckung deren Lagerstellen zudem einfach und sicher zu säubern.

Günstigerweise sind alle mit dem Schlachttierkörper in Berührung kommenden Oberflächen mit einer bekannten funktionellen Oberfläche ausgerüstet, die auch eine antimikrobielle Wirkung besitzt.

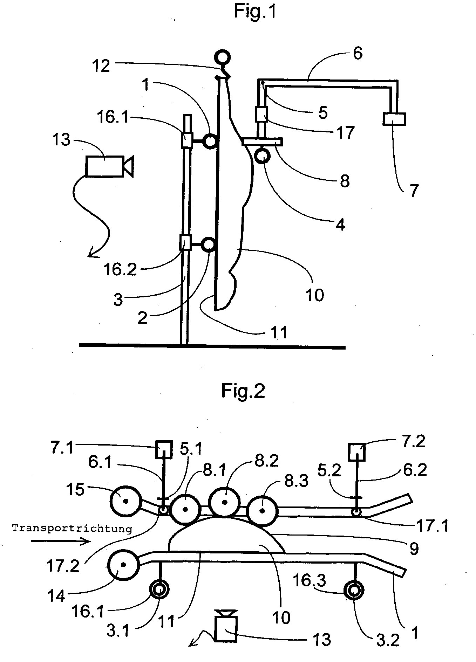

Die Erfindung wird als Ausführungsbeispiel an Hand von Fig. 1 als schematische Darstellung der Positioniervorrichtung mit einer Schlachtschweinhälfte im Vertikalschnitt; und Fig. 2 als schematische Teilschnittdarstellung der Positioniervorrichtung mit einer Schlachtschweinhälfte in der Aufsicht im Bereich der oberen Führungen näher erläutert.

Nach Fig. 1 besteht eine Positioniervorrichtung im Wesentlichen mindestens aus einer vorderen oberen Führung 1 und einer dazu parallelen unteren Führung 2, an vertikalen Ständern 3 (3.1; 3.2), die am Boden verankert sein können, sowie einem hinteren Führungselement 4 an einem Ende, eines, an einem Fixpunkt 5 (5.1; 5.2) drehbaren, Hebel 6 (6.1; 6.2) von dessen anderem Ende ein Massestück 7 (7.1; 7.2) aufgenommen ist.

Im Bereich der Aufnahmeposition sind nach Fig. 2 am hinteren Führungselement 3 Rollen 8 (8.1; 8.2; 8.3) angeordnet.

Die Rolle 8.2 weist gegen die Rollen 8.1 und 8.3 einen Achsversatz auf, so dass über eine Rückenkontur 9, einer in den Figuren 1 und 2 stilisiert dargestellten Schlachtschweinhälfte 10, mittels einer Wirkverbindung der Massestücke 7.1 und 7.2, den Hebeln 6.1 und 6.2, dem hinteren Führungselement 4 sowie dem Umfang der Rollen 8.1, 8.2 und 8.3 an drei Stellen eine Kraft eingebracht wird, so dass die Fläche einer Spaltseite 11 der an einem Haken 12 an einer Transportbahn hängenden Schlachtschweinhälfte 10 an den Führungen 1, 2 anliegt und somit parallel zur Aufnahmeebene einer Kamera 13 ausgerichtet ist.

In Ausführungsvarianten kann die Rolle 8.2 an der Unterseite des hinteren Führungselements 4 montiert sein, wobei die Rollen 8.1 und 8.3 auf dessen Oberseite bzw. die Rolle 8.2 und die Rollen 8.1 und 8.3 an sich gegenüberliegenden Seiten angeordnet sind, oder die Rolle 8.2 in der Art von zwei Rollen ausgebildet ist, wovon eine oberhalb und eine unterhalb des hinteren Führungselements 4 angeordnet ist.

Am Einlauf der Positioniervorrichtung sind an der oberen Führung 1 eine weitere Rolle 14 und am hinteren Führungselement 4 eine zusätzliche Rolle 15 angeordnet, die den senkrechten Einlauf der am Haken 12 hängenden Schlachtschweinhälfte 10 sicherstellen.

Die Höhe und der vertikale Abstand der Führungen 1; 2 ist mittels deren verstellbarer Halterungen 16 (16.1; 16.2; 16.3) an den vertikalen Ständern 3.1 und 3.2 an die örtlichen Verhältnisse, entsprechend der Höhe der Fördereinrichtung sowie der Größe von Schlachtschweinhälften 10, angepasst.

Zur Anpassung der Höhe der Rollen 8 (8.1; 8.2; 8.3) am hinteren Führungselements 4, so dass deren radiale Mitte mit der Hauptachse der oberen Führung 1 übereinstimmt, ist am Hebel 6 oder an einer Halterung des hinteren Führungselements 4 am Hebel 6 (6.1; 6.2) ein Verstellelement 17 (17.1; 17.2) vorhanden.

### Verwendete Bezugszeichen

- 1: obere Führung
- 2: untere Führung
- 3: vertikaler Ständer (3.1; 3.2)
- 4: hinteres Führungselement
- 5: Fixpunkt (5.1; 5.2)
- 6: Hebel (6.1; 6.2)
- 7: Massestück (7.1; 7.2)
- 8: Rollen (8.1; 8.2; 8.3)
- 9: Rückenkontur
- 10: Schlachtschweinhälfte
- 11: Spaltseite
- 12: Haken
- 13: Kamera
- 14: weitere Rolle
- 15: zusätzliche Rolle
- 16: Halterungen (16.1; 16.2; 16.3)
- 17: Verstellelement (17.1; 17.2)

## Patentansprüche

1. Positioniervorrichtung für an Haken hängenden Schlachttierkörperhälften, insbesondere Schweinehälften, zur parallelen Ausrichtung der Spaltebene gegenüber einer Aufnahmeebene einer Kamera zur nachfolgenden Bewertung und Klassifizierung mittels optischer Bildverarbeitung, aufweisend mindestens zwei vertikal übereinander, mit genügendem Abstand, außerhalb des der Kamera zugewandten, interessierenden Aufnahmebereichs waagerecht an vertikalen Ständern angeordneten Führungsrohren oder -elementen, **dadurch gekennzeichnet, dass** bezüglich der Spaltseite (11), vorzugsweise in Höhe der oberen Führung (1), ein hinteres Führungselement (4) beweglich angeordnet ist, das im Bereich der Aufnahmeposition der Schlachtschweinhälfte (10) Rollen (8.1; 8.2; 8.3) als Druckelemente aufweist.

2. Positioniervorrichtung nach Anspruch 1, **dadurch gekennzeichnet,**
**dass** das hintere Führungselement (4) mit einem Ende, eines, an einem Fixpunkt (5.1; 5.2) drehbaren Hebels (6.1; 6.2) verbunden ist und sich am anderen Ende des drehbaren Hebels (6.1; 6.2) ein Massestück (7.1; 7.2) befindet.

3. Positioniervorrichtung nach Anspruch 1 und 2, **dadurch gekennzeichnet,**
**dass** die Achsen der Rollen (8.1; 8.2; 8.3) im Rückenbereich der Schlachtschweinhälfte (10) in der horizontalen Ebene im Aufnahmebereich entsprechend einer Rückenkontur (9) gegeneinander versetzt sind.

4. Positioniervorrichtung nach Anspruch 1 und 2, **dadurch gekennzeichnet,**
**dass** die Rollen (8.1; 8.2; 8.3) im Rückenbereich der Schlachtschweinhälfte (10) entsprechend der Rückenkontur (9) unterschiedliche Durchmesser aufweisen.

5. Positioniervorrichtung nach einem der Ansprüche 1 bis 4,
**dadurch gekennzeichnet,**
**dass** die Rolle (8.2) und die Rollen (8.1; 8.3) an sich gegenüberliegenden Seiten des hinteren Führungselements (4) angeordnet sind.

6. Positioniervorrichtung nach einem der Ansprüche 1 bis 4,
**dadurch gekennzeichnet,**
**dass** die Rolle (8.2) in der Art von zwei Rollen ausgebildet ist, wovon eine oberhalb und eine unterhalb des hinteren Führungselements (4) angeordnet ist.

7. Positioniervorrichtung nach einem der Ansprüche 1 bis 6,
**dadurch gekennzeichnet,**
**dass** am Einlauf der Positioniervorrichtung, an der oberen Führung (1) eine weitere Rolle (14) und am hinteren Führungselement (4) eine zusätzliche Rolle (15) angeordnet sind.

8. Positioniervorrichtung nach Anspruch 7, **dadurch gekennzeichnet,**
**dass** die Achsen der weiteren Rolle (14) und der zusätzlichen Rolle (15) entsprechend des Winkels einer über dem Einlauf geneigt verlaufenden Rohrbahn geneigt sind.

9. Positioniervorrichtung nach einem der Ansprüche 1 bis 8,
**dadurch gekennzeichnet,**
**dass** die Rollen ( 8.1; 8.2; 8.3; 14; 15) vollflächig ausgebildet sowie deren Lagerstellen abgedeckt sind.

10. Positioniervorrichtung nach einem der Ansprüche 1 bis 9, **dadurch gekennzeichnet,**
**dass** im Bereich des Einlaufs der Positioniervorrichtung ein Anlaufelement angeordnet ist, an das das jeweilige Vorderbein der Schlachtschweinhälfte (10) anläuft und für die linke Hälfte eine Drehung der Spaltseite (11) in Richtung der Kamera (13) bewirkt.

11. Positioniervorrichtung nach einem der Ansprüche 1 bis 10, **dadurch gekennzeichnet,**
**dass** die Positioniervorrichtung modular aufgebaut ist.

12. Positioniervorrichtung nach einem der Ansprüche 1 bis 11, **dadurch gekennzeichnet,**
**dass** die Führungen (1; 2) an den vertikalen Ständern (3.1; 3.2) verstellbare Halterungen (16.1; 16.2; 16.3) aufweisen.

13. Positioniervorrichtung nach Anspruch 2, **dadurch gekennzeichnet,**
**dass** am Hebel (6.1; 6.2) oder an einer Halterung des hinteren Führungselements (4) ein Verstellelement (17.1; 17.2) vorhanden ist.

14. Positioniervorrichtung nach einem der Ansprüche 1 bis 13, **dadurch gekennzeichnet,**
**dass** alle mit dem Schlachttierkörper in Berührung kommenden Oberflächen mit einer funktionellen Oberfläche ausgerüstet sind, die auch eine antimikrobielle Wirkung aufweist.

## Claims

1. Positioning device for halves of slaughtered animal bodies, in particular pig halves, suspended on hooks for the parallel alignment of the cleaving plane with respect to a capture plane of a camera for the subsequent evaluation and classification by means of optical image processing, comprising at least two guide tubes or elements disposed horizontally on vertical supports vertically one above the other with a sufficient spaced disposition, outside the relevant capture region facing the camera, **characterised in that** in relation to the cleaving side (11), preferably at the level of the upper guide (1), rear guide element (4) is disposed in a movable manner and, in the region of the capture position of the slaughtered pig half (10), comprises rollers (8.1; 8.2; 8.3) as pressure elements.

2. Positioning device as claimed in Claim 1, **characterised in that** the rear guide element (4) is connected to one end of a lever (6.1; 6.2) which can rotate about a fixed point (5.1; 5.2), and a mass (7.1; 7.2) is located at the other end of the rotatable lever (6.1; 6.2).

3. Positioning device as claimed in Claim 1 and 2, **characterised in that** the axes of the rollers (8.1; 8.2; 8.3) are offset with respect to each other corresponding to a back contour (9) in the back region of the slaughtered pig half (10) in the horizontal plane in the capture region.

4. Positioning device as claimed in Claim 1 and 2, **characterised in that** the rollers (8.1; 8.2; 8.3) have different diameters corresponding to the back contour (9) in the back region of the slaughtered pig half (10).

5. Positioning device as claimed in any one of Claims 1 to 4, **characterised in that** the roller (8.2) and the rollers (8.1; 8.3) are disposed on opposite sides of the rear guide element (4).

6. Positioning device as claimed in any one of Claims 1 to 4, **characterised in that** the roller (8.2) is formed in the manner of two rollers, one of which being disposed above the rear guide element (4) and the other being disposed beneath the rear guide element (4).

7. Positioning device as claimed in any one of Claims 1 to 6, **characterised in that** at the inlet of the positioning device a further roller (14) is disposed on the upper guide (1) and an additional roller (15) is disposed on the rear guide element (4).

8. Positioning device as claimed in Claim 7, **characterised in that** the axes of the further roller (14) and of the additional roller (15) are inclined corresponding to the angle of a tubular track extending in an inclined manner over the inlet.

9. Positioning device as claimed in any one of Claims 1 to 8, **characterised in that** the rollers (8.1; 8.2; 8.3; 14; 15) are formed with a solid surface and their bearing points are covered.

10. Positioning device as claimed in any one of Claims 1 to 9, **characterised in that** in the region of the inlet of the positioning device there is disposed a run-up element on which the respective foreleg of the slaughtered pig half (10) runs up and for the left half effects rotation of the cleaving side (11) in the direction of the camera (13).

11. Positioning device as claimed in any one of Claims 1 to 10, **characterised in that** the positioning device is constructed in a modular manner.

12. Positioning device as claimed in any one of Claims 1 to 11, **characterised in that** the guides (1; 2) comprise retainers (16.1; 16.2; 16.3) which can be adjusted on the vertical supports (3.1; 3.2).

13. Positioning device as claimed in Claims 2, **characterised in that** an adjusting element (17.1; 17.2) is provided on the lever (6.1; 6.2) or on a retainer of the rear guide element (4).

14. Positioning device as claimed in any one of Claims 1 to 13, **characterised in that** all of the surfaces coming into contact with the slaughtered animal body are provided with a functional surface which also comprises an antimicrobial effect.

## Revendications

1. Dispositif de positionnement pour demi-carcasse, notamment une demi-carcasse de porc, accrochée à un crochet pour aligner parallèlement le plan de division par rapport à un plan de réception d'une caméra pour exploiter et classer par traitement optique de l'image, comprenant:
au moins deux éléments ou tubes de guidage situés verticalement l'un au-dessus de l'autre, à distance suffisante, en dehors de la plage de prise de vue intéressante tournée vers la caméra, ces tubes ou éléments étant installés horizontalement sur des supports verticaux,
**caractérisé en ce que**
par rapport au côté de division (11) de préférence à hauteur du guide supérieur (1), il est prévu un élément de guidage arrière (4), monté mobile, et ayant des galets (8.1 ; 8.2; 8.3) comme éléments de poussée dans la zone de la position de réception des moitiés de carcasses de porc (10).

2. Dispositif de positionnement selon la revendication 1,
**caractérisé en ce que**
l'élément de guidage arrière (4) est relié à une extrémité d'un levier (6.1; 6.2) tournant autour d'un point fixe (5.1, 5.2) et à l'autre extrémité du levier tournant (6.1; 6.2), il y a une masse (7.1; 7.2).

3. Dispositif de positionnement selon les revendications 1 et 2,
**caractérisé en ce que**
les axes des galets (8.1; 8.2; 8.3) sont décalés dans la zone du dos de la moitié de carcasse de porc (10) dans le plan horizontal, dans la zone de prise de vue en fonction du contour (9) du dos, avec un décalage réciproque.

4. Dispositif de positionnement selon les revendications 1 et 2,
**caractérisé en ce que**
les axes des galets (8.1 ; 8.2; 8.3) dans la zone du dos de la moitié de carcasse de porc (10), ont des diamètres différents correspondant au contour (9) du dos.

5. Dispositif de positionnement selon l'une des revendications 1 à 4,
**caractérisé en ce que**
le galet (8.2) et les galets (8.1; 8.3) sont prévus sur les côtés respectivement opposés de l'élément de guidage arrière (4).

6. Dispositif de positionnement selon l'une des revendications 1 à 4,
**caractérisé en ce que**
le galet (8.2) est réalisé à la manière de deux galets et l'un se trouve au-dessus et l'autre en dessous de l'élément de guidage arrière (4).

7. Dispositif de positionnement selon l'une des revendications 1 à 6,
**caractérisé en ce que**
à l'entrée du dispositif de positionnement, l'élément de guidage supérieur (1) comporte un autre galet (14) et l'élément de guidage arrière (4) comporte un galet supplémentaire (15).

8. Dispositif de positionnement selon la revendication 7,
**caractérisé en ce que**
les axes des autres galets (14) et des galets supplémentaires (15) sont inclinés en fonction de l'angle qu'un convoyeur à roulement fait par rapport à l'entrée.

9. Dispositif de positionnement selon l'une des revendications 1 à 8,
**caractérisé en ce que**
les galets (8.1; 8.2; 8.3; 14; 15) sont réalisés avec des surfaces pleines et leurs points d'appui sont couverts.

10. Dispositif de positionnement selon l'une des revendications 1 à 9,
**caractérisé par**
un élément de guidage au niveau de l'entrée du dispositif de positionnement, contre lequel arrive la partie avant respective de la demi-carcasse de porc (10) et produit sur la moitié gauche une rotation du côté de division (11) en direction de la caméra (13).

11. Dispositif de positionnement selon l'une des revendications 1 à 10,
**caractérisé en ce que**
le dispositif de positionnement a une construction modulaire.

12. Dispositif de positionnement selon l'une des revendications 1 à 11,
**caractérisé en ce que**
les moyens de guidage (1, 2) des supports verticaux (3.1; 3.2) comportent des moyens de fixation réglables (16.1; 16.2; 16.3).

13. Dispositif de positionnement selon la revendication 2,
**caractérisé par**
un élément de réglage (17.1; 17.2) sur le levier (6.1; 6.2) ou sur un moyen de fixation de l'élément de guidage arrière (4).

14. Dispositif de positionnement selon l'une des revendications 1 à 13,
**caractérisé en ce que**
toutes les surfaces arrivant en contact avec la carcasse, sont munies d'une surface fonctionnelle ayant un effet antimicrobien.
